# EUROPEAN PATENT APPLICATION

(11) **EP 3 210 797 A1**
(43) Date of publication of application: **30.08.2017**
(21) Application number: 17156123.6
(22) Date of filing: 14.02.2017
(51) Int. Cl.: B60C 9/00, B60C 9/18, B60C 15/00

(54) **PNEUMATIC TIRE**

(30) Priority: 26.02.2016 JP 2016036097
(71) Applicant: Sumitomo Rubber Industries, Ltd., Kobe-shi, Hyogo-ken (JP)
(72) Inventor: KAWABATA, Hiroshi, Kobe-shi, Hyogo 651-0072 (JP)
(74) Representative: Manitz Finsterwald Patentanwälte PartmbB

(57) **Abstract**

A pneumatic tire is provided in the tread portion 2 with a belt 7 comprising a radially outermost first belt ply 7_{A} and a radially inner second belt ply 7_{B} each composed of belt cords 7c, and a band 8 thereon comprising a band ply 8_{A} compound of a band cord 8c. At least one of axially outer edge portions of the belt 7 is provided between the first belt ply 7_{A} and the second belt ply 7_{B} with a first reinforcing rubber layer 11 having a radially outer surface which is convexed radially outwardly and along which an axially outer edge portion 15 of the first belt ply 7A extends in a mountain shape so as to have an axially inner portion 15a extending axially outwardly and obliquely toward the band ply 8_{A} and an axially outer portion 15b extending axially outwardly and obliquely away from the band ply 8A.

## Description

### Technical Field

The present invention relates to a pneumatic tire, more particularly to a tread reinforcing belt-and-band structure capable of improving durability of the band.

### Background Art

There has been known a pneumatic tire provided in the tread portion with a belt ply having free cut edges. During vulcanizing such tire, the cut edges are liable to detach from a radially inner tire component due to pressure applied by a bladder, and the cut ends of belt cords at the ply edges tend to come in contact with a band disposed radially outside the belt ply. Further, during use of the vulcanized tire, there is a possibility that the cut ends of the belt cords repeatedly come in contact with band cords of the band. In such a case, the band tends to be damaged in an early stage of the tire life.

Japanese Patent Application Publication No. 2013-067350 discloses a pneumatic tire, wherein each edge of a belt ply is covered with a fiber reinforced rubber layer. Such structure is however, not sufficient in preventing damage of a band disposed on the radially outside thereof, and there has been a room for further improvement.

### Summary of the Invention

The present invention was made in view of the above, and a primary object thereof is to provide a pneumatic tire in which the durability of the band can be improved.

According to the present invention, a pneumatic tire comprises:
a tread portion,
a pair of bead portions with a bead core therein,
a pair of sidewall portions extending therebetween,
a carcass extending between the bead portions through the tread portion and the sidewall portions,
a belt comprising at least two belt plies disposed radially outside the carcass in the tread portion and each composed of a plurality of belt cords inclined at an angle with respect to the tire circumferential direction, and
a band comprising a band ply disposed radially outside at least one of axially outer edge portions of the belt and composed of at least one band cord whose angle with respect to the tire circumferential direction is smaller than the angle of each of the above-mentioned at least two belt plies, wherein
the above-mentioned at least two belt plies include a radially outermost first belt ply and a radially inner second belt ply,
the above-mentioned at least one of axially outer edge portions of the belt is provided between the first belt ply and the second belt ply with a first reinforcing rubber layer having a radially outer surface being convexed radially outwardly,
in the above-mentioned at least one of axially outer edge portions of the belt, the first belt ply extends along the radially outer surface of the first reinforcing rubber layer so as to have an axially inner portion extending axially outwardly and obliquely toward the band ply and an axially outer portion extending axially outwardly and obliquely away from the band ply (or toward the carcass), and the axially inner portion and the axially outer portion have a mountain-shape in a transverse section of the pneumatic tire including the tire rotational axis.

Therefore, in the pneumatic tire according to the present invention, the axially outer edge portion of the belt can prevent the outer ends of the belt cords of the first belt ply from coming into contact with the band cord of the band. Accordingly, the damage of the band due to the contact of the belt cord ends can be effectively prevented to improve the durability of the band.

In the pneumatic tire according to the present invention, it is preferable that the first reinforcing rubber layer has a triangular cross section having an apex toward the radially outside of the tire, and the apex has an obtuse apex angle.

In the pneumatic tire according to the present invention, it is preferable that the apex angle is 150 to 170 degrees.

In the pneumatic tire according to the present invention, it is preferable that the first reinforcing rubber layer has a maximum thickness of from 1.0 to 2.0 mm.

In the pneumatic tire according to the present invention, it is preferable that a second reinforcing rubber layer is disposed between the band and the first belt ply in the above-mentioned at least one of axially outer edge portions of the belt.

In the pneumatic tire according to the present invention, it is preferable that an axially outer edge of the second reinforcing rubber layer is positioned axially outside an axially outer edge of the band.

In the pneumatic tire according to the present invention, it is preferable that a third reinforcing rubber layer is disposed between the carcass and the second belt ply in the above-mentioned at least one of axially outer edge portions of the belt.

In the pneumatic tire according to the present invention, it is preferable that axially outer edges of the first belt ply, the second belt ply and the first reinforcing rubber layer are sandwiched between the second reinforcing rubber layer and the third reinforcing rubber layer.

In the pneumatic tire according to the present invention, it is preferable that the belt cords of each of the first belt ply and the second belt ply are rubberized with a topping rubber having a hardness smaller than that of the first reinforcing rubber layer.

In the pneumatic tire according to the present invention, it is preferable that the second reinforcing rubber layer is made of rubber having a hardness smaller than that of the first reinforcing rubber layer.

### Brief Description of the Drawings

Fig. 1 is a cross-sectional view of the pneumatic tire as an embodiment of the present invention.
Fig. 2 is a developed view showing the inclining directions of the belt cords and the band cords in Fig. 1.
Fig. 3 is a magnified cross-sectional view showing the axially outer edge portion of the belt in Fig. 1.
Fig. 4 is a magnified cross-sectional view of the first reinforcing rubber layer in Fig. 3.
Fig. 5 is a cross-sectional view showing an axially outer edge portion of the belt of a pneumatic tire as Comparative example 1.
Fig. 6 is a cross-sectional view showing an axially outer edge portion of the belt of a pneumatic tire as Comparative example 2.
Fig. 7 is a cross-sectional view showing an axially outer edge portion of the belt of a pneumatic tire as Comparative example 3.

### Description of the Preferred Embodiment

An embodiment of the present invention will now be described in detail in conjunction with accompanying drawings.

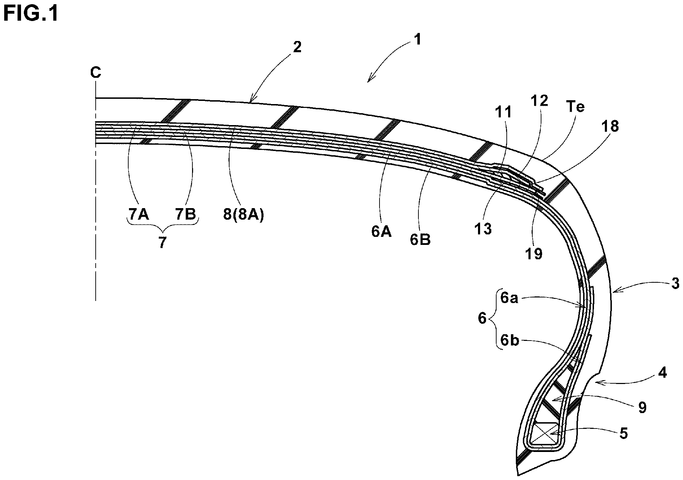

Fig. 1 is a cross-sectional view, including the rotational axis, of a pneumatic tire 1 in the present embodiment in a normally inflated unloaded state showing a right half of the tire 1.
The tire 1 in this embodiment is a racing tire used in circuit racing, for example.

The "normally inflated unloaded state" is a state where the tire 1 is mounted on a standard wheel rim (not shown in the figures), inflated to a standard pressure, and loaded with no tire load.

In this application including specification and claims, various dimensions, positions and the like of the tire refer to those in the normally inflated unloaded state of the tire unless otherwise noted.

The "standard wheel rim" is a wheel rim specified for the concerned tire by a standard included in a standardization system on which the tire is based, for example, the "normal wheel rim" in JATMA, "Design Rim" in TRA, and "Measuring Rim" in ETRTO. If there is no corresponding standard for the concerned tire, the "standard wheel rim" is a wheel rim which the tire's manufacturer recommends.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. If there is no corresponding standard for the concerned tire, the "standard pressure" is air pressure which the tire's manufacturer recommends.

The tire 1 comprises a tread portion 2 with tread edges Te, a pair of axially spaced bead portions 4 each with a bead core 5 therein, a pair of sidewall portions 3 extending between the tread edges Te and the bead portions 4, a carcass 3 extending between the bead portions 4, a belt 7 disposed radially outside the carcass in the tread portion, and a band 8 disposed radially outside the belt 7 in the tread portion.

The carcass 6 is composed of at least one ply (in this embodiment, two plies 6A and 6B) of cords arranged radially at an angle in the range of from 80 to 90 degrees with respect to the tire circumferential direction, extending between the bead portions 4 through the tread portion 2 and the sidewall portions 3, and turned up around the bead core 5 in each bead portion 4 from the axially inside to the axially outside of the tire to form a pair of turnup portions 6b and a main portion 6a therebetween. For the carcass cords, organic fiber cords made of nylon, rayon, polyester, aramid or the like can be suitably used.

Each of the bead portions 4 is provided between the turned up portion 6b and the main body 6a with a bead apex 9 extending radially outwardly from the bead core 5 in a tapered manner.

The belt 7 is disposed on the radially outside of the carcass 6 in the tread portion 2. The belt 7 comprises a radially-outermost first belt ply 7A and a second belt ply 7B disposed on the radially inside of the first belt ply 7A. In this embodiment, the belt 7 consists of the two belt plies 7A and 7B. But, according to the present invention, the belt 7 is not limited to such configuration, and it may be composed of three or more belt plies, for example.

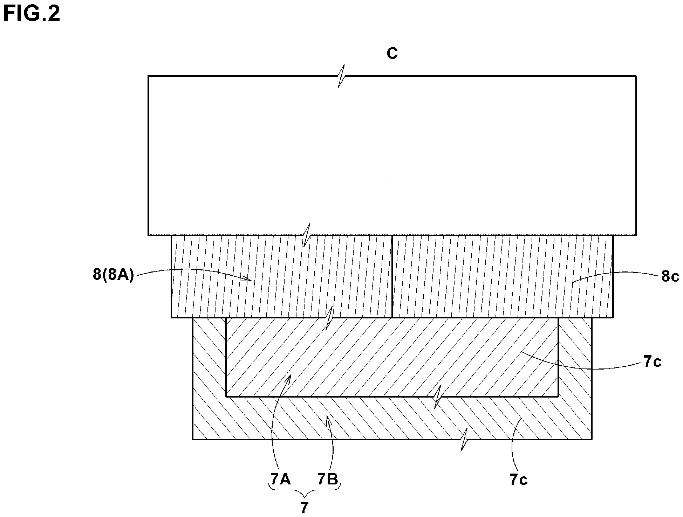

As shown in Fig. 2, each of the belt plies 7A and 7B is composed of parallel belt cords inclined with respect to the tire circumferential direction and rubberized with a topping rubber. The inclining direction of the belt cords 7c of the belt ply 7A is opposite to that of the belt cords 7c of the belt ply 7B. The inclination angle of the belt cords of each belt ply with respect to the tire circumferential direction is preferably not less than 20 degrees, more preferably not less than 40 degrees, but preferably not more than 80 degrees, more preferably not more than 60 degrees.
As a material for the belt cords, steel is suitably used in this embodiment, but it is not limited to this, and organic fiber cords such as nylon, rayon, aramid and the like may be used.

In this embodiment, as shown in Fig. 1, the axial width of the first belt ply 7A is smaller than the axial width of the second belt ply 7B, and the axially outer edges 18 of the first belt ply 7A are positioned axially inside the axially outer edges 19 of the second belt ply 7B.
The axially outer edges 18 of the first belt ply 7A and the axially outer edges 19 of the second belt ply 7B are disposed in the vicinities of the tread edges Te. For that purpose, the axial width of each of the belt plies 7A and 7B is set in the range from 85 to 95 % of the tread width TW.

The "tread edges Te" are the axial outermost edges of the ground contacting patch of the tire which occur under a normally inflated loaded condition when the camber angle of the tire is zero. The normally inflated loaded condition is such that the tire is mounted on the standard wheel rim and inflated to the standard pressure and loaded with a standard tire load. The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The "tread width TW" is the axial distance between the tread edges Te measured under the above-mentioned normally inflated unloaded state of the tire.

The band 8 is disposed radially outside the belt 7 so as to cover at least axially outer edge portions of the belt 7. That is, the band 8 can be so called edge bands which respectively cover only the axially outer edge portions of the belt 7.
However, it is also preferable that the band 8 covers the entire width of the belt 7. That is, the band 8 can be so called a full-width band.
Further, the band 8 can be a combination of a full-width band and a pair of edge bands.
In this embodiment, as shown in Fig. 2, the band 8 is a full-width band wider than the belt 7.
Anyway, it is preferable that the band 8 is formed by spirally winding at least one band cord 8c so as to form a full-width band, a pair of edge bands, or a combination of a full-width band and edge bands.

The inclination angle of the band cord or cords 8c with respect to the tire circumferential direction is smaller than the inclination angles of the belt cords 7c, in particular, those of the radially outermost belt ply. For example, the inclination angle is at most 5 degrees. The band 8 configured as such can prevent the belt 7 from lifting, therefore, it is possible to improve high-speed durability of the tread portion 2.

In this embodiment, aramid is used as a material for the band cord 8c. It is preferable that the band cord 8c has a modulus of from 10 to 50 cN/dtex, more preferably 15 to 30 cN/dtex in order to improve the steering stability and the ride comfort in a good balance.
Here, the "modulus" means the "initial tensile resistance" defined in Japanese Industrial Standard JIS L1017, chapter 8.8 "Test methods for chemical fiber tire cords", and the value of the initial tensile resistance is obtained by averaging ten measurement values measured under the following test conditions.
Test temperature: 20 degree Celsius
Test humidity: 65 %
Tester: Material testing machine Type 2005 manufactured by Intesco Co., Ltd.
Material holding distance: 250 mm
Test speed: 300 mm/ min

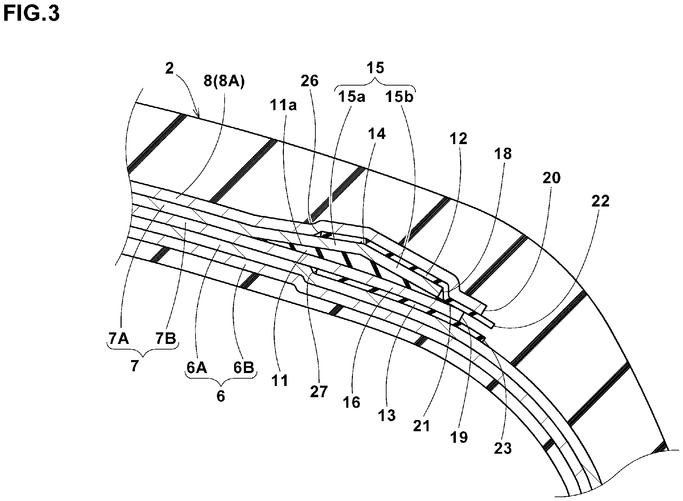

As shown in Fig. 3, the above-mentioned at least one of the axially outer edge portions of the belt 7 (in this embodiment, each of the axially outer edge portions) is provided between the first belt ply 7A and the second belt ply 7B with a first reinforcing rubber layer 11.

The radially outer surface 11a of the first reinforcing rubber layer 11 is convexed radially outwardly. Such configuration of the first reinforcing rubber layer 11 will be described in detail below.

As shown in Fig. 3, an axially outer edge portion 15 of the first belt ply 7A has a mountain shape, comprising an axially inner portion 15a and an axially outer portion 15b which extend along the radially outer surface 11a of the first reinforcing rubber layer 11, wherein
the axially inner portion 15a extends axially outwardly and obliquely toward the band ply 8A, whereas
the axially outer portion 15b extends axially outwardly and obliquely away from the band ply 8A or toward the carcass 6. Therefore, if the outer edge portion 15 is lifted, an apex portion 14 between the inner portion 15a and the outer portion 15b comes into contact with the band 8 in advance of the outer edge 18 of the first belt ply 7A, and the cut ends of the belt cords 7c are prevented from contacting with the band cord 8c. Thus, it is possible to prevent the damage of the band 8 effectively.

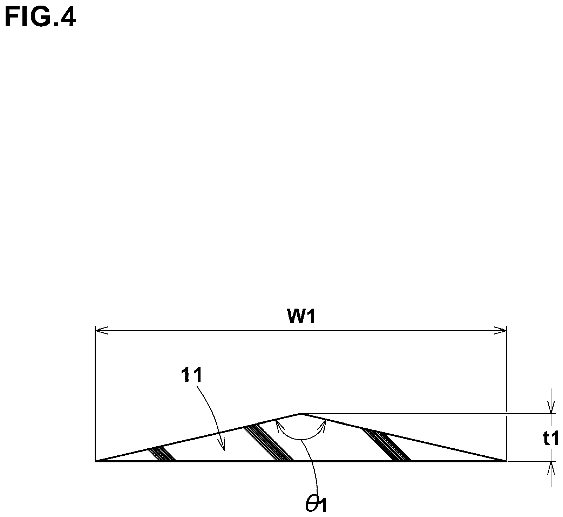

Fig. 4 shows the cross-section of the first reinforcing rubber layer 11. In order to exert the above described effects more efficiently, it is preferred that the first reinforcing rubber layer has a triangular cross-cross sectional shape having an apex toward the radially outside and the apex angle θ1 is an obtuse angle. Preferably, the apex angle θ1 is not less than 150 degrees, more preferably not less than 155 degrees, and preferably not greater than 170 degrees, more preferably not greater than 165 degrees. The first reinforcing rubber layer 11 configured as such can allow the first belt ply 7A to bend moderately, and it is possible to expect the above described effects without sacrificing the durability of the first belt ply 7A.

If the thickness and the width of the first reinforcing rubber layer 11 are small, there is a possibility that the ends of the belt cords 7c come into contact with the band cord 8c. If the thickness and the width are large, the outer edge portion 15 of the first belt ply 7A is deformed greatly, and there is a possibility that a ply separation is caused.
From these points of view, the maximum thickness t1 of the first reinforcing rubber layer 11 at the apex portion 14 is preferably set in a range from 1.0 to 2.0 mm. The width w1 of the first reinforcing rubber layer 11 is preferably set in a range from 25 to 35 mm.

As shown in Fig. 3, the axially outer edge 21 of the first reinforcing rubber layer 11 is preferably disposed axially outside the axially outer edge 18 of the first belt ply 7A. Preferably, the axial distance between the outer edge 21 and the outer edge 18 is set in a range from 2.0 to 8.0 mm, for example. The first reinforcing rubber layer 11 configured as such can effectively prevent a separation failure starting from the axially outer edge 18 of the first belt ply 7A.

It is preferable that the first reinforcing rubber layer 11 has a rubber hardness more than 1.0 times, more preferably not less than 1.1 times that of the topping rubber of each belt ply 7A, 7B. Preferably, the first reinforcing rubber layer 11 has a rubber hardness of from 50 to 70 degrees, for example. The first reinforcing rubber layer 11 configured as such can suppress the deformation of the outer edge portion 15 of the first belt ply and helps to improve the durability of the tread portion.
In this specification, the "rubber hardness" means a type-A durometer hardness measured at a temperature of 23 degrees Celsius according to Japanese Industrial Standard JIS K6253.

As shown in Fig. 3, the axially outer edge of the belt 7 in this embodiment is preferably provided with a second reinforcing rubber layer 12 and a third reinforcing rubber layer 13 each extending axially with a constant thickness.

The second reinforcing rubber layer 12 is disposed between the outer edge portion 15 of the first belt ply 7A and the band 8. The second reinforcing rubber layer 12 configured as such can further suppress the contact of the outer edge portion 15 of the first belt ply 7A with the band 8. In order to ensure this effect, the axially outer edge 22 of the second reinforcing rubber layer 12 is preferably positioned axially outside the axially outer edge 20 of the band 8.

On the other hand, the axially inner edge 26 of the second reinforcing rubber layer 12 is preferably disposed axially inside the apex portion 14 between the inner portion 15a and the outer portion 15b of the first belt ply. The second reinforcing rubber layer 12 configured as such can prevent the apex portion 14 from directory contacting with the band 8, therefore, it is possible to improve durability of the tread portion 2.

It is preferable that the second reinforcing rubber layer 12 is composed of a rubber compound harder than the topping rubber of each belt ply 7A, 7B. For example, the rubber hardness of the second reinforcing rubber layer 12 is preferably set in a range from 50 to 70 degrees. More preferably, the second reinforcing rubber layer 12 in this embodiment is composed of a rubber compound having the same hardness as the first reinforcing rubber layer 11. The second reinforcing rubber layer 12 configured as such has a small difference in the hardness from the first reinforcing rubber layer 11, therefore, it is possible to disperse the stress exerted around the axially outer edge portion of the belt 7.

The third reinforcing rubber layer 13 is disposed between an axially outer edge portion 16 of the second belt ply 7B and the carcass 6 as shown in Fig. 3. The third reinforcing rubber layer 13 configured as such can prevent the ends of the belt cords 7c of the second belt ply 7B from coming into contact with the carcass 6.
In order to ensure this effect, the axially outer edge 23 of the third reinforcing rubber layer 13 is preferably disposed axially outside the axially outer edge 20 of the band 8 and axially outside the axially outer edge 19 of the second belt ply 7B.

Further, it is preferable that the axially inner edge 27 of the third reinforcing rubber layer 13 is disposed axially inside the apex portion 14 of the first belt ply 7A. Thereby, it is possible to suppress deformation of the axially outer edge portion of the belt 7.

The third reinforcing rubber layer 13 is preferably composed of a rubber compound being harder than the topping rubber of each belt ply 7A, 7B. Specifically, the rubber hardness of the third reinforcing rubber layer 13 is preferably set in a range from 50 to 70 degrees. Further, it is preferable that the third reinforcing rubber layer 13 is composed of a rubber compound having the same hardness as the second reinforcing rubber layer 12. The third reinforcing rubber layer 13 configured as such can disperse the stress exerted around the axially outer edge portion of the belt 7.

If the thickness and the width of the second reinforcing rubber layer 12 and those of the third reinforcing rubber layer 13 are small, there is a possibility that the durability of the outer edge portion of the belt 7 is not improved sufficiently. If they are large, there is a possibility that the temperature of the reinforcing rubber layers becomes easy to rise. From these points of view, it is preferable that the thicknesses of the second reinforcing rubber layer 12 and the third reinforcing rubber layer 13 are set in a range from 1.0 to 2.0 mm, for example, and the axial widths of the second reinforcing rubber layer 12 and the third reinforcing rubber layer 13 are set in a range from 25 to 35 mm, for example.

In this embodiment, the axially outer edges of the first belt ply 7A, the second belt ply 7B and the first reinforcing rubber layer 11 are sandwiched between the second reinforcing rubber layer 12 and the third reinforcing rubber layer 13. Thereby, the tread portion 2 is prevented from damage starting from each of the axially outer edges.
while detailed description has been made of the pneumatic tire as an embodiment of the present invention, the present invention can be embodied in various forms without being limited to the illustrated embodiment.

### comparison tests

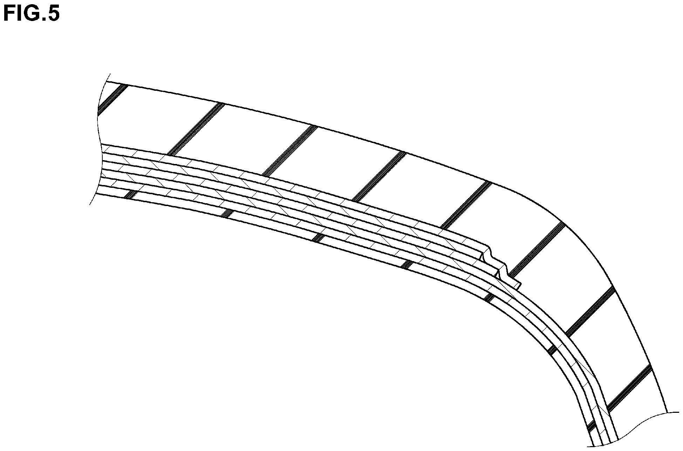

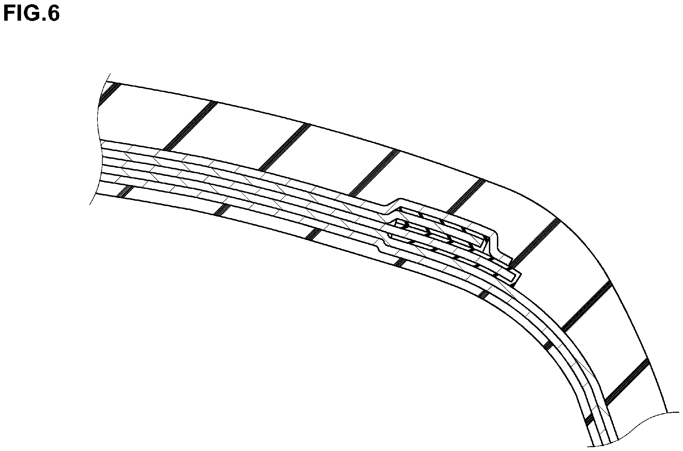

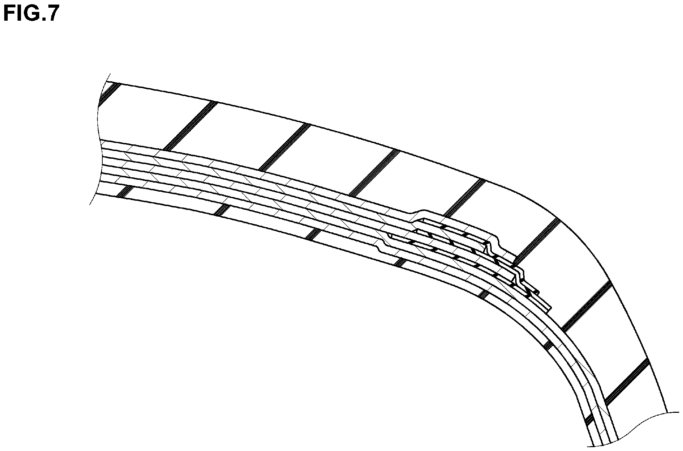

According to the specifications listed in Table 1, pneumatic tires of size 330/710R18 (rim size 18x13J) for use in circuit racing were experimentally manufactured as test tires. The test tires included: working examples Ex.1-Ex.7 having structures based on the structure shown in Fig. 1; Comparative example Ref.1 without a reinforcing rubber layer as shown in Fig. 5; Comparative example Ref.2 provided with reinforcing rubber layers wrapping the axially outer edges of the belt plies, respectively, as shown in Fig. 6; and Comparative example 3 provided with reinforcing rubber layers each having a constant thickness as shown in Fig. 7.
The test tires were tested for durability.

### < Durability test >

Using a tire test drum, each test tire was run at a speed of 180 km/h to obtain a running time until the band was damaged. (tire pressure 180 kPa)
The results are indicated in Table 1 by an index based on Comparative example Ref.1 being 100, wherein the larger the index value, the higher the high-speed durability.

**Table 1**

| Tire | Ref.1 | Ref.2 | Ref.3 | Ex.1 | Ex.2 | Ex.3 | Ex.4 | Ex.5 | Ex.6 | Ex.7 |
|---|---|---|---|---|---|---|---|---|---|---|
| Structure (Fig. No.) | 5 | 6 | 7 | 3 | 3 | 3 | 3 | 3 | 3 | 3 |
| First Reinforcing Rubber Layer | | | | | | | | | | |
| Apex angle (deg.) | - | - | - | 160 | 150 | 155 | 165 | 170 | 160 | 160 |
| Max. thickness t1(mm) | - | - | - | 1.5 | 1.5 | 1.5 | 1.5 | 1.5 | 1.0 | 2.0 |
| Durability | 100 | 105 | 105 | 112 | 108 | 111 | 111 | 108 | 110 | 111 |

From the test results, it was confirmed that working examples were suppressed from being damaged in the band, and exerted excellent durability.

### Reference Signs List

- 2: tread portion
- 3: sidewall portion
- 4: bead portion
- 5: bead core
- 6: carcass
- 7: belt
- 7c: belt cord
- 7A: first belt ply
- 7B: second belt ply
- 8: band
- 8c: band cord
- 11: first reinforcing rubber layer
- 15: outer edge portion
- 15a: inner portion
- 15b: outer portion

## Claims

1. A pneumatic tire comprising:
a tread portion,
a pair of bead portions each with a bead core therein,
a pair of sidewall portions extending therebetween,
a carcass extending between the bead portions through the tread portion and the sidewall portions,
a belt comprising at least two belt plies disposed radially outside the carcass in the tread portion and each composed of a plurality of belt cords inclined at an angle with respect to the tire circumferential direction, and
a band comprising a band ply disposed radially outside at least one of axially outer edge portions of the belt and composed of at least one band cord whose angle with respect to the tire circumferential direction is smaller than the angle of each of said at least two belt plies,
wherein
said at least two belt plies include a radially outermost first belt ply and a radially inner second belt ply,
said at least one of axially outer edge portions of the belt is provided between the first belt ply and the second belt ply with a first reinforcing rubber layer having a radially outer surface being convexed radially outwardly,
in said at least one of axially outer edge portions of the belt, the first belt ply extends along the radially outer surface of the first reinforcing rubber layer so as to have an axially inner portion extending axially outwardly and obliquely toward the band ply and an axially outer portion extending axially outwardly and obliquely away from the band ply, and the axially inner portion and the axially outer portion have a mountain-shape in a transverse section of the pneumatic tire including the tire rotational axis.

2. The pneumatic tire according to claim 1, wherein the first reinforcing rubber layer has a triangular cross section having an apex toward the radially outside of the tire, and the apex has an obtuse apex angle.

3. The pneumatic tire according to claim 2, wherein the apex angle is 150 to 170 degrees.

4. The pneumatic tire according to any one of claims 1-3, wherein the first reinforcing rubber layer has a maximum thickness of from 1.0 to 2.0 mm.

5. The pneumatic tire according to any one of claims 1-4, wherein a second reinforcing rubber layer is disposed between the band and the first belt ply in said at least one of axially outer edge portions of the belt.

6. The pneumatic tire according to claim 5, wherein an axially outer edge of the second reinforcing rubber layer is positioned axially outside an axially outer edge of the band.

7. The pneumatic tire according to any one of claims 1-4, wherein a third reinforcing rubber layer is disposed between the carcass and the second belt ply in said at least one of axially outer edge portions of the belt.

8. The pneumatic tire according to claim 5 or 6, wherein a third reinforcing rubber layer is disposed between the carcass and the second belt ply in said at least one of axially outer edge portions of the belt.

9. The pneumatic tire according to claim 8, wherein axially outer edges of the first belt ply, the second belt ply and the first reinforcing rubber layer are sandwiched between the second reinforcing rubber layer and the third reinforcing rubber layer.

10. The pneumatic tire according to any one of claims 1-9, wherein the belt cords of each of the first belt ply and the second belt ply are rubberized with a topping rubber having a hardness smaller than that of the first reinforcing rubber layer.

11. The pneumatic tire according to claim 5 or 6, wherein the second reinforcing rubber layer is made of rubber having a hardness smaller than that of the first reinforcing rubber layer.
